Europäisches Patentamt

European Patent Office

Office européen des brevets

(11) Publication number: **0 234 132**
**B1**

## EUROPEAN PATENT SPECIFICATION

(45) Date of publication of the patent specification: 07.02.90

(51) Int. Cl.⁴: **F16H 61/42**

(21) Application number: 86400371.0

(22) Date of filing: 21.02.86

(54) Hydraulic transmisson.

(43) Date of publication of application:
02.09.87 Bulletin 87/36

(45) Publication of the grant of the patent:
07.02.90 Bulletin 90/6

(84) Designated Contracting States:
DE FR GB IT

(56) References cited:
BE-A- 424 313
DE-C- 519 686
FR-A- 788 035
FR-A- 1 371 784
FR-A- 1 391 511
GB-A- 1 228 169
US-A- 1 777 851
US-A- 2 062 310
US-A- 2 804 016
US-A- 2 988 007
US-A- 3 185 557
US-A- 3 543 515
US-A- 3 561 212
US-A- 3 609 973

(73) Proprietor: SHIMADZU CORPORATION, 378, Ichinofunairi-cho Kawaramachi-dori Nijo Sagaru, Nakagyo-ku Kyoto 604(JP)

(72) Inventor: Yasuo, Kita, 62-39, Ohtsuka Motoyashiki-cho, Yamashina-ku Kyoto 607(JP)
Inventor: Tadashi, Kanno, 4-11-12, Hiyoshidai, Otsu-shi Shiga 520(JP)

(74) Representative: Rodhain, Claude et al, Cabinet Claude Rodhain 30, rue la Boétie, F-75008 Paris(FR)

ACTORUM AG

## Description

The present invention relates to a transmission which can be used in various machines to transmit power from a rotary power source with a wide range of rotational speed.

A hydraulic transmission using two hydraulic engines one of which acting as a hydraulic pump when the other serves as a hydraulic motor, finds numerous applications, because it can change speed continuously. Many transmissions of this kind have been studied and developed so far. A rotary fluid energy converter disclosed in Japanese laid open application No. 77179/1983 is an example of such a hydraulic engine. Another example of such a transmission is known by U.S. Patent 2 988 007, which discloses a hydraulic transmission constituted of a pump and a hydraulic motor which are in communication with each other through a fluid passage, each of which having an eccentric or inclined member which is movable to vary the volume of liquid discharged by the pump respectively motor, the pump receiving an input rotational speed which is transformed inside the transmission so that the motor delivers a variable output rotational speed, namely comprising a first means for resiliently urging the movable member of the pump in an abutment position, and a second means for resiliently urging the movable member of the motor in an abutment position. It is to be noted that many conventional hydraulic transmission makes use of a combination of a piston pump and a motor of either the swash plate type or the bent axis type; furthermore, in many conventional systems, only the pump has a variable displacement and the motor has a fixed displacement, what makes the obtainable range of speeds narrow, whilst in systems where the pump and the motor both have variable displacements, the two displacements are frequently varied independently, what renders the control of the system complex.

It is an object of the invention to provide a hydraulic transmission which makes use of hydraulic engines as mentioned above to give an excellent efficiency, is able to continuously and smoothly vary the ratio of the output rotational speed to the input rotational speed, and is simple in structure.

The hydraulic transmission according to the invention uses a plurality of hydraulic engines. The volume of liquid displaced by each of the hydraulic engines is varied by shifting its movable or eccentric member, like the aforementioned rotary fluid energy converter. One of the hydraulic engines is used as a pump, while the other is employed as a motor. Fluid passages communicating with these hydraulic engines are connected together to each other; furthermore, a control mechanism is provided to regulate the displacement and to control the movement or position of the movable members.

Accordingly, in a first embodiment, the invention concerns a hydraulic transmission constituted of a pump and a hydraulic motor which are in communication with each other through a fluid passage, each of which has an eccentric or inclined member which is movable to vary the volume of liquid discharged by the pump respectively motor, said pump receiving an input rotational speed which is transformed inside the transmission so that the motor delivers a variable output rotational speed, comprising a first means for resiliently urging the movable member of the pump in an abutment position, and a second means for resiliently urging the movable member of the motor in an abutment position, characterized in that it also comprises a unique common actuating mechanism connected to both movable members of the pump and the motor so that each movable member can be moved only when the other movable member is in its fixed abutment position, said pump and motor are disposed side by side symmetrically with their input respectively output shafts parallel to each other and extending outwards in the same direction, their respective housings being rigidly connected to each other, said movable members being resiliently urged in abutment position towards each other, and said actuating mechanism being constituted of a slidably actuating rod whose end positions engage connecting portions of the respective movable members of the pump and the motor. Thus, the actuating mechanism is so located that its operating ends directly bear against the movable members of the pump and motor or are indirectly connected to said movable members.

In a second embodiment, the invention concerns a hydraulic transmission constituted of a pump and a hydraulic motor which are in communication with each other through a fluid passage, each of which has an eccentric or inclined member which is movable to vary the volume of liquid discharged by the pump respectively motor, said pump receiving an input rotational speed which is transformed inside the transmission so that the motor delivers a variable output rotational speed, comprising a first means for resiliently urging the movable member of the pump in an abutment position, and a second means for resiliently urging the movable member of the motor in an abutment position, characterized in that it also comprises a unique common actuating mechanism connected to both movable members of the pump and the motor so that said movable members are connected so as to be moved simultaneously by said actuating mechanism, said pump and motor are disposed side by side symmetrically with their input respectively output shafts parallel to each other and extending outwards in the same direction, their respective housings being rigidly connected to each other, said movable members being resiliently urged in abutment position towards each other, and said actuating mechanism being constituted of a slidably actuating rod whose end positions engage connecting portions of the respective movable members of the pump and the motor, and said connecting portion of the movable members of the pump and the motor comprises a recessed bore or the like, said bore being formed in such a way with respect to the length of the rod that both movable members cannot be simultaneously in their abutment position.

Besides, the invention concerns a hydraulic transmission constituted of a pump and a hydraulic motor which are in communication with each other through a fluid passage, each of which has an eccentric or inclined member which is movable to vary the volume of liquid discharged by the pump respectively motor, said pump receiving an input rotational speed which is transformed inside the transmission so that the motor delivers a variable output rotational speed, comprising a first means for resiliently urging the movable member of the pump in an abutment position, and a second means for resiliently urging the movable member of the motor in an abutment position, characterized in that it also comprises a unique common actuating mechanism connected to both movable members of the pump and the motor so that at least one movable member can be moved at once, and said pump and motor are mounted in a common housing, with pins protruding from each movable member respectively, said pins cooperating with a same common rotatable lever engaging said pins so as to control the movement of both movable members.

It is to be noted that according to a preferred embodiment of the invention, the actuating mechanism is so designed that the displacement of the pump is made variable only for a certain range of its positions where the displacement of the motor is fixed, and over another range of positions of the actuating mechanism, the displacement of the motor is variable only when the displacement of the pump is constant, whilst in another embodiment of the invention, when the movable member of the pump is shifted to increase or decrease the displacement of the pump, the movable member of the motor is simultaneously shifted to respectively decrease or increase the displacement of the motor.

Other objects and features of the invention will appear in the course of the following description, and in the drawings in which:

Fig. 1 is a side elevation view in cross section of a hydraulic transmission according to the invention;

Fig. 2 is a side elevation view in cross section of another mechanical transmission according to the invention;

Figs. 3 and 4 are graphs for illustrating the operation of the transmission shown in Fig. 1; and

Fig. 5 is a side elevation view in cross section of an alternative embodiment of the hydraulic transmission shown in Fig. 1.

Fig. 6 is a cross sectional view of a prefered embodiment of the control means for the transmission of Fig. 1.

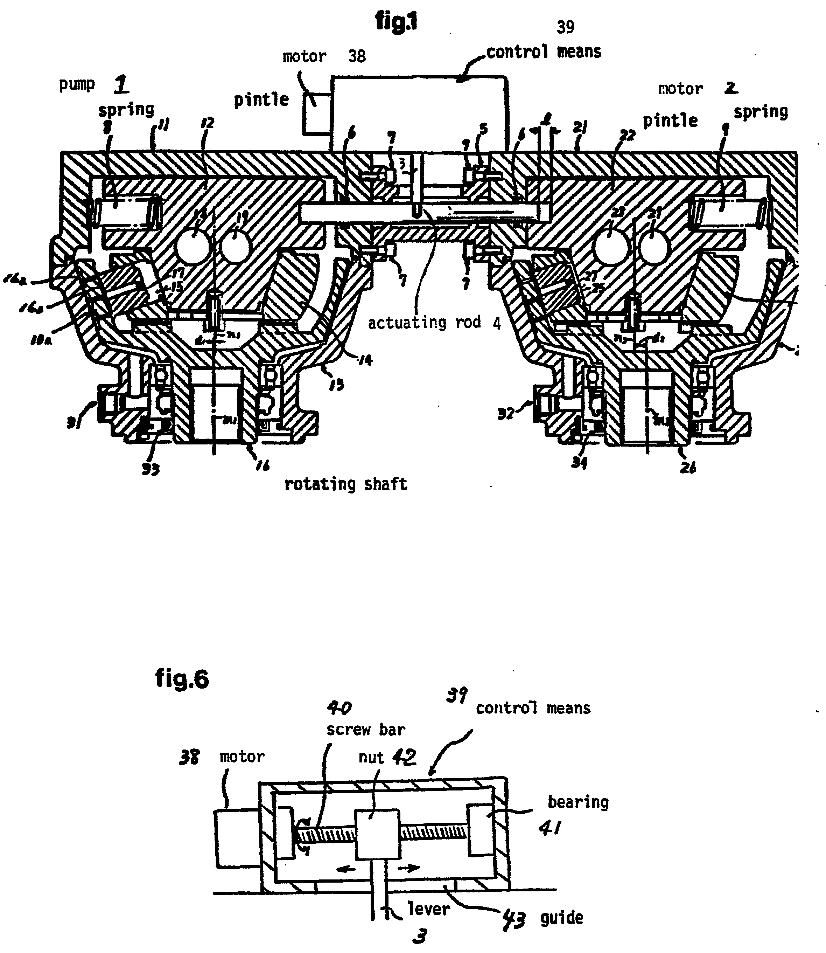

Referring to Fig. 1, there is shown a hydraulic transmission according to the invention. This transmission has rotary fluid energy converters in the form of a pump 1 and in the form of a motor 2. Rotary force from a rotary power source (not shown) is applied to the rotating shaft 16 of the pump 1, so that it is converted into hydraulic energy which is then reconverted into mechanical energy by the motor 2. This mechanical energy is developed by the rotating shaft 26 of the motor 2 to actuate an equipement (not shown) coupled to the shaft 26.

The pump 1 has housings 11 and 13. Similarly, the motor 2 has housings 21 and 23. The rotating shaft 16 is mounted rotatably within the housings 11 and 13. The rotating shaft 26 is mounted rotatably within the housings 21 and 23. Pintles 12 and 22 are mounted so as to be movable perpendicularly to the shafts 16 and 26. One end portion of the pintles 12 and 22 has an inverted, truncated conic form. Cylinder blocks 14 and 24 are rotatably fitted over the cones of the pintles 12 and 22, respectively, and have borings 15 and 25, respectively. Pistons 17 and 27 are slidably mounted in the borings 15 and 25, respectively, in a substantially perpendicular relation to their corresponding cones.

A first static pressure bearing 16a is formed between the inner conic surface of the housing 13 and a portion of the outer conic surface of the rotating shaft 16. A second static pressure bearing 16b is formed by combination of the end surface of each piston 17 and the inner, inclined surface of the shaft 16 that bears against the end surface of each piston 17. If torque is applied to the rotating shaft of the pump from a driving equipment (not shown), a couple corresponding to the input torque is developed by the first and second static pressure bearings. Mechanical energy is directly converted into fluid energy by the couple. This fluide energy, or high pressure energy, is discharged from pump exit 18 through an elongated passageway (not shown) that divides the cone of the pintle into two parts. The discharged fluid enters the inlet, indicated by numeral 28, to the motor by way of a passage (not shown). The fluid energy acts in the manner reverse to the pump, and imparts a couple to the output rotating shaft 26. This couple is delivered as a torque by the shaft 26. After doing its work, the fluid flows flows through a suction port 19 into the motor via a discharge port 29 formed in the motor and via a passage (not shown). As it is well known in the art, a cross relief valve, boost valve, or the like may be mounted in the passage that interconnects the pump and the motor, if necessary.

The volume of liquid displaced by the pump 1 varies depending on the eccentricity $d1$ that is defined as the distance of the axis of rotation $n1$ of the cylinder barrel 14 from the axis of rotation $m1$ of the shaft 16. The eccentricity $d1$ can be changed by shifting the pintle perpendicularly to the axis of rotation. Thus, the pintle functions as an eccentric member. The distance $d1$ can be regarded as the eccentricity of pintle 12. The pintle 12 is urged in one direction by a spring 8, and is actuatable in the opposite direction by an actuating rod 4. A lever 3 is attached to the rod 4 so that the rod 4 can be manually or mechanically actuated.

The rotational speed of the motor 2 per unit of fluid volume can be varied depending on the eccentricity $d1$ of the pintle 22 that is defined as the distance of the axis of rotation $n2$ of the cylinder barrel 24 from the axis of rotation $m2$ of the rotating shaft 26. The pintle 22 is urged in one direction by a spring 9, and is actuatable in the opposite direction by the actuaring rod 4.

The housings of the pump 1 and the motor 2 are connected together by a connecting member 5 and screws 7. The actuating rod 4 can slide right and left along the connecting member 5. The locations at which rod 4 is mounted to the housings are sealed by seal members 6 such as O-rings.

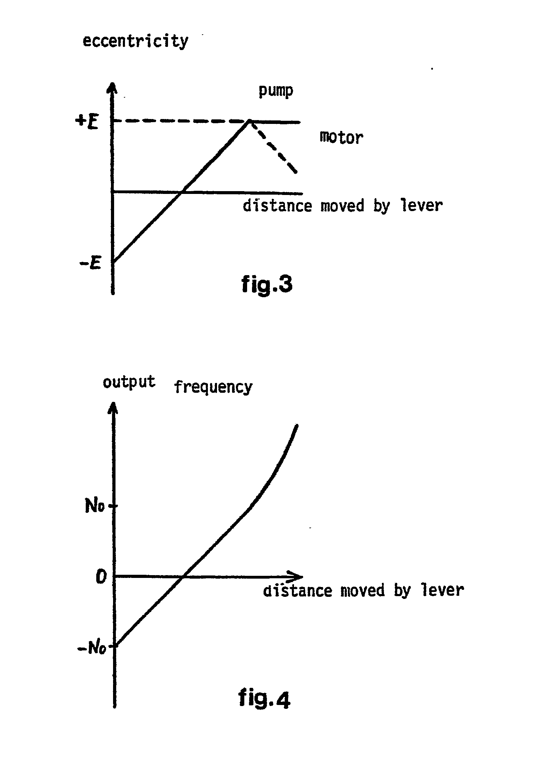

The manner in which the pintles 12 and 22 are shifted when the actuating rod is moved left or right by the use of a level 3, or of control means 39 is now described by referring to Fig. 3. When the rod 4 is in its leftmost position (initial position), the pintle 12 is pushed into its leftmost position by the rod 4 and bears on the housing 11. In this state, the eccentricity of the pintle 12 is equal to "-E". Simultaneously, the pintle 22 of motor 2 is pushed to the left into contact with the housing 21 by the spring 9. A gap l is left between the rod 4 and the pintle 22 so that the rod 4 does not act on the pintle 22. We assume that the eccentricity of pintle 22 is equal to + E under this condition.

If the rod 4 is then moved to the right, the pintle 12 is pushed by the spring 8 and shifted to the right, but the pintle 22 is not moved until the rod 4 comes into contact with the pintle 22, at which time the rod 4 has travelled a distance l. The right end of the pintle 12 bears against the housing and is stopped in abutment. If the rod 4 is moved further to the right, the pintle 12 is no longer shifted, but the pintle 22 is moved to the right by the rod 4. When the pintle 12 moves to the right, the distance travelled by the lever is considered to be positive. When the pintle 22 moves to the left, the distance travelled by the lever is considered to be negative. Thus, if distances have the same sign, then it follows that the rotations are identical in direction.

Refering to Fig. 6, the level 3 is driven by control means 39. When an input signal is received by the motor 38, the nut 42 connected to the lever 3 is translated by means of rotative screw bar 40. Said screw bar 40 is mounted rotatable on a bearing 41 with no axial clearance. The nut 42 and lever 3 are prevented from rotating around said screw bar 40 by means of a guiding slot 43.

In alternative embodiments, the lever 3 may be driven by a hydraulic actuator or merely hand operated, with locking means (not shown) at intermediate positions.

According to a further embodiment, the rod 4 may be made variable in length. This enable adjusting the length of clearance "l", and therefore the "zero-position" of the rod and more generally the output delivered by the transmission for given positions and moves of level 3.

Fig.4 shows the output rotational speed plotted against the distance travelled by the lever when the input rotational speed is maintained at a constant value of No. In such a case that the pump and the motor are identical with respect to the diameter and the number of pistons, when the lever is at its leftmost position, i.e., the distance travelled by the lever is zero, the output rotation is opposite in direction to the input rotation, but both rotations are identical in rotational speed. When the eccentricity of the pintle 12 (eccentricity of the pump) is zero, the output rotation becomes equal to zero. When the eccentricity of the pump becomes equal to the eccentricity of the motor, the output rotation becomes equal to the input rotation. If the lever is moved further, the output rotational frequency increases.

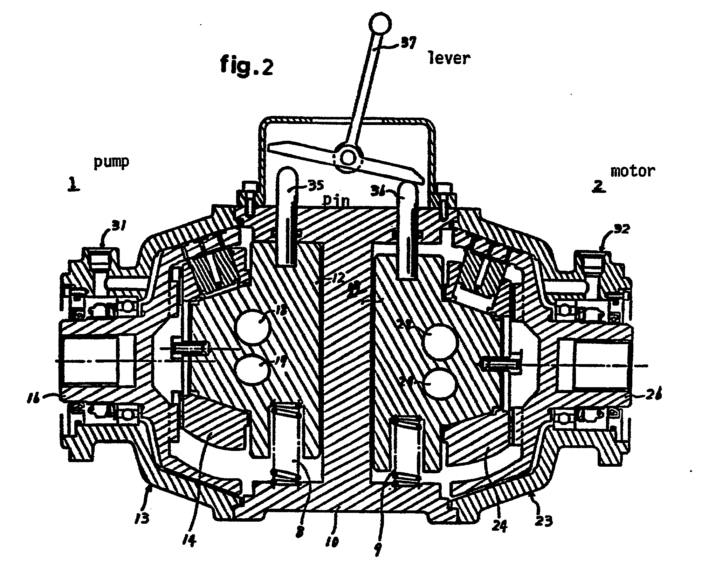

Another embodiment of the hydraulic transmission according to the invention is shown in Fig. 2.

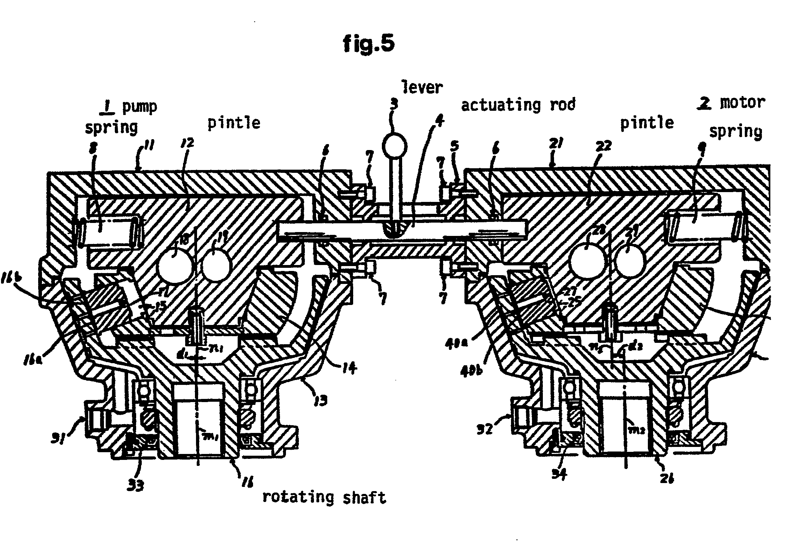

This transmission also uses the same rotary fluid energy converters as are used in the transmission already described in connection with Fig. 1. It is to be noted that like components are indicated by like reference numerals throughout Figs. 1, 2, 5. In the transmission shown in Fig. 1, the pump 1 and the motor 2 are disposed in parallel. In the transmission shown in Fig. 2, they are disposed in series and coupled together by a single housing 10. The pump 1 and the motor 2 are similar in operation to their corresponding counterparts shown in Fig. 1. However, the eccentricities of the pintles 12 and 22 are controlled by operating a rotary lever. More specifically, the pintles 12 and 22 are urged by the springs 8 and 9, respectively, and are pressed by the lever, indicated by numeral 37, via pins 35 and 36, respectively. The eccentricities vary by rotation of the lever. The relation of the eccentricities of the pintles 12 and 22 to the angle through which the lever rotates is also given as shown in Fig. 3. The output frequency varies as shown in Fig.4. In the transmission shown in Fig. 2, the movable members of the hydraulic engines operate simultaneously in an interrelated manner. One embodiment of this arrangement is shown in Fig. 5.

The transmission shown in Fig. 5 is obtained by setting the length l of the transmission shown in Fig. 1 equal to zero. The pump and the motor shown in Fig. 5 are similar in operation to their corresponding counterparts shown in Fig.1 and will not be described below. In the system shown in Fig. 5, the pintles 12 and 22 are moved in an interrelated manner by shifting the actuating rod 4. As the displacement of the pump is increased or decreased, the displacement of the motor is respectively decreased or increased, permitting sequential control. Obviously, this inventive concept can also be applied to the mechanism shown in Fig. 2 where a control input is applied through the use of the lever. In this case, pins 35 and 36 bear on the lever at the same time.

Although the invention has been described in its preferred forms with a certain degree of particularity, it should be understood that the invention is not limited to the illustrated embodiments. For example, in the illustrated embodiments, the rotary fluid energy converters are used as the hydraulic engines whose displacements of liquid is varied by movement of the eccentric member (central distributor). Other hydraulic engines, such as swash plate type axial piston pump and motor and bent axis type axial piston pump and motor, may also be employed as the hydraulic engines. In this alternative case, swash plates or bent axes act as the movable members which are driven by the above-described actuating mechanism. This can provide a transmission in which speed can be smoothly varied. Also, the springs 8 and 9 are merely shown as urging means. The actuating rod, the lever 3, the pins 35, 36 and the lever 37 are shown as an example of the mechanism through which a control input is applied. As an example, cams may be used in such a way that the rotation of each cam is controlled. Where a lever is used, the control force may take a mechanical form, such as hydraulic pressure, may use a screw feed mechanism, or may utilize electromagnetic force.

Since the novel hydraulic transmission of the present invention operates hydraulic engines, such as rotary fluid energy converters which have little energy loss, as a pump and a motor, efficiency is greatly improved. The control mechanism according to the invention is simple in structure and makes it possible to obtain a wide range of smooth speed change operations. As the output rotational frequency is proportional to the distance travelled by the control mechanism, control operation is very easy to achieve.

## Claims

1. A hydraulic transmission constituted of a pump (1) and a hydraulic motor (2) which are in communication with each other through a fluid passage, each of which has an eccentric or inclined member (12, 22) which is movable to vary the volume of liquid discharged by the pump (1) respectively motor (2), said pump (1) receiving an input rotational speed which is transformed inside the transmission so that the motor (2) delivers a variable output rotational speed, comprising a first means (8) for resiliently urging the movable member (12) of the pump (1) in an abutment position, and a second means (9) for resiliently urging the movable member (22) of the motor (2) in an abutment position, characterized in that it also comprises a unique common actuating mechanism (3, 4; 35, 36, 37) connected to both movable members (12, 22) of the pump (13) and the motor (2) so that each movable member can be moved only when the other movable member is in its fixed abutment position, said pump (1) and motor (2) are disposed side by side symmetrically with their input (16) respectively output (26) shafts parallel to each other and extending outwards in the same direction, their respective housings (13, 23) being rigidly connected to each other, said movable members (12, 22) being resiliently urged in abutment position towards each other, and said actuating mechanism being constituted of a slidably actuating rod (4) whose end positions engage connecting portions of the respective movable members (12, 22) of the pump (1) and the motor (2).

2. A hydraulic transmission constituted of a pump (1) and a hydraulic motor (2) which are in communication with each other through a fluid passage, each of which has an eccentric or inclined member (12, 22) which is movable to vary the volume of liquid discharged by the pump (1) respectively motor (2), said pump (1) receiving an input rotational speed which is transformed inside the transmission so that the motor (2) delivers a variable output rotational speed, comprising a first means (8) for resiliently urging the movable member (12) of the pump (1) in an abutment position, and a second means (9) for resiliently urging the movable member (22) of the motor (2) in an abutment position, characterized in that it also comprises a unique common actuating mechanism (3, 4; 35, 36, 37) connected to both movable members (12, 22) of the pump (1) and the motor (2) so that said movable members are connected so as to be moved simultaneously by said actuating mechanism, said pump (1) and motor (2) are disposed side by side symmetrically with their input (16) respectively output (26) shafts parallel to each other and extending outwards in the same direction, their respective housings (13, 23) being rigidly connected to each other, said movable members (12, 22) being rigidly urged in abutment position towards each other, and said actuating mechanism being constituted of a slidably actuating rod (4) whose end positions engage connecting portions of the respective movable members (12, 22) of the pump (1) and the motor (2), and said connecting portion of the movable members (12, 22) of the pump (1) and the motor (2) comprises a recessed bore or the like, said bore being formed in such a way with respect to the length of the rod (4) that both movable members (12, 22) cannot be simultaneously in their abutment position.

3. A hydraulic transmission constituted of a pump (1) and a hydraulic motor (2) which are in communication with each other through a fluid passage, each of which has an eccentric or inclined member (12, 22) which is movable to vary the volume of liquid discharged by the pump (1) respectively motor (2), said pump (1) receiving an input rotational speed which is transformed inside the transmission so that the motor (2) delivers a variable output rotational speed, comprising a first means (8) for resiliently urging the movable member (12) of the pump (1) in an abutment position, and a second means (9) for resiliently urging the movable member (22) of the motor (2) in an abutment position, characterized in that it also comprises a unique common actuating mechanism (3, 4; 35, 36, 37) connected to both movable members (12, 22) of the pump (1) and the motor (2) so that at least one movable member can be moved at once, and said pump (1) and motor (2) are mounted in a common housing (10), with pins (35, 36) protruding from each movable member (12, 22) respectively, said pins (35, 36) cooperating with a same common rotatable lever (37) engaging said pins so as to control the movement of both movable members (12, 22).

4. A hydraulic transmission according to claim 1 or 2, characterized in that said actuating mechanism (3, 4; 35, 36, 37) moves said movable members along a distance proportional to an input control signal.

5. A hydraulic transmission according to claim 1, characterized in that said connecting portion of the movable members (12, 22) of the pump (1) and the motor (2) comprises a recessed bore or the like, said bore being formed in such a way with respect to the length of the rod (4) that both movable members (12, 22) can be simultaneously in their abutment position.

6. A hydraulic transmission according to claim 2, characterized in that the rod (4) is rigidly fixed to both the pump (1) and the motor (2).

## Revendications

1. Transmission hydraulique constituée d'une pompe (1) et d'un moteur hydraulique (2) qui sont en communication l'un avec l'autre par un passage de fluide, chacun d'eux comportant un élément excentrique ou incliné (12, 22) qui est déplaçable pour faire varier le volume de liquide respectivement évacue par la pompe (1) et le moteur (2), ladite pompe (1) recevant une vitesse de rotation d'entrée qui est transformée à l'intérieur de la transmission de manière que le moteur (2) fournisse une vitesse de rotation de sortie variable, comportant un premier moyen (8) pour déplacer élastiquement l'élément déplaçable (12) de la pompe (1) dans une position de butée et un second moyen (9) pour déplacer élastiquement l'élément déplaçable (22) du moteur (2) dans une position de butée, caractérisée en ce qu'elle comporte également un mécanisme de manœuvre commun unique (3, 4; 35, 36, 37) relié aux deux éléments déplaçables (12, 22) de la pompe (1) et du moteur (2) de manière que chaque élément déplaçable ne puisse être déplacé que si l'autre élément déplaçable est dans sa position de butée fixe, ladite pompe (1) et ledit moteur (2) étant disposés côte-à-côte symétriquement avec leurs arbres d'entrée (16) et de sortie (26) respectifs parallèles l'un à l'autre et s'étendant vers l'extérieur dans la même direction, leurs cartes respectifs (13, 23) étant assemblés rigidement l'un avec l'autre, lesdits éléments déplaçables (12, 22) étant déplacés élastiquement en position de butée l'un vers l'autre, et ledit mécanisme de manœuvre étant constitué d'une tige de manœuvre coulissante (4) dont les positions d'extrémité sont en contact avec des parties de liaison des éléments déplaçables respectifs (12, 22) de la pompe (1) et du moteur (2).

2. Transmission hydraulique constituée d'une pompe (1) et d'un moteur hydraulique (2) qui sont en communication l'un avec l'autre par un passage de fluide, chacun d'eux comportant un élément excentrique ou incliné (12, 22) qui est déplaçable pour faire varier le volume de liquide respectivement évacué par la pompe (1) et le moteur (2), ladite pompe (1) recevant une vitesse de rotation d'entrée qui est transformée à l'intérieur de la transmission de manière que le moteur (2) fournisse une vitesse de rotation de sortie variable, comportant un premier moyen (8) pour déplacer élastiquement l'élément déplaçable (12) de la pompe (1) dans une position de butée et un second moyen (9) pour déplacer élastiquement l'élément déplaçable (22) du moteur (2) dans une position de butée, caractérisé en ce qu'elle comporte également un mécanisme de manœuvre commun unique (3, 4, 35, 36, 37) relié aux deux éléments déplaçables (12, 22) de la pompe (1) et du moteur (2) de manière que lesdits éléments déplaçables soient reliés pour être déplacés simultanément par ledit mécanisme de manœuvre, ladite pompe (1) et ledit moteur (2) étant disposés côte-à-côte symétriquement avec leurs arbres d'entrée (16) et de sortie (26) respectifs parallèles l'un à l'autre et s'étendant vers l'extérieur dans la même direction, leurs carters respectifs (13, 23) étant assemblés rigidement l'un avec l'autre, lesdits éléments déplaçables (12, 22) étant déplacés rigidement en position de butée l'un vers l'autre, et ledit mécanisme de manœuvre étant constitué d'une tige de manœuvre coulissante (4) dont les positions d'extrémité sont en contact avec des parties de liaison des éléments déplaçables respectifs (12, 22) de la pompe (1) et du moteur (2) ladite partie de liaison des éléments déplaçables (12, 22) de la pompe (1) et du moteur (2) comportant un alésage de logement ou similaire, ledit alésage étant constitué, par un rapport à la longueur de la tige (4), de manière que les deux éléments déplaçables (12, 22) ne puissent pas être simultanément dans leur position de butée.

3. Transmission hydraulique constituée d'une pompe (1) et d'un moteur hydraulique (2) qui sont en communication l'un avec l'autre par un passage de fluide, chacun d'eux comportant un élément excentrique ou incliné (12, 22) qui est déplaçable pour faire varier le volume de liquide respectivement évacué par la pompe (1) et le moteur (2), ladite pompe (1) recevant une vitesse de rotation d'entrée qui est transformée à l'intérieur de la transmission de manière que le moteur (2) fournisse une vitesse de rotation de sortie variable, comportant un premier moyen (8) pour déplacer élastiquement l'élément déplaçable (12) de la pompe (1) dans une position de butée et un second moyen (9) pour déplacer élastiquement l'élément déplaçable (22) du moteur (2) dans une position de butée, caractérisé en ce quelle comporte également un mécanisme de manœuvre commun unique (3, 4; 35, 36, 37) relié aux deux éléments déplaçables (12, 22) de la pompe (1) et du moteur (2) de manière qu'au moins un élément déplaçable puisse être déplacé à la fois, ladite pompe (1) et ledit moteur (2) étant montés dans un carter commun (10), des broches (35, 36) étant respectivement en saillie à partir de chaque élément déplaçable, lesdites broches (35, 36) coopérant avec un levier tournant commun unique (37) en contact avec lesdites broches de manière à commander le déplacement des deux éléments déplaçables.

4. Transmission hydraulique selon la revendication 1 ou 2, caractérisé en ce que ledit mécanisme de manœuvre (3, 4; 35, 36, 37) déplace lesdits éléments déplaçables suivant une distance proportionnelle à un signal de commande d'entrée.

5. Transmission hydraulique selon la revendication 1, caractérisé en ce que ladite partie de liaison des éléments déplaçables (12, 22) de la pompe (1) et du moteur (2) comporte un alésage de logement ou similaire, ledit alésage étant constitué, par rapport à la longueur de la tige (4), de manière que les deux éléments déplaçables (12, 22) puissent être simultanément dans leur position de butée.

6. Transmission hydraulique selon la revendication 2, caractérisé en ce que la tige (4) est fixée de façon rigide à la pompe (1) ainsi qu'au moteur (2).

## Patentansprüche

1. Hydraulisches Getriebe, aufgebaut aus einer Pumpe (1) und einem Hydraulikmotor (2), die über einen Fluidkanal miteinander in Verbindung stehen und jeweils mit einem exzentrischen oder schräg gestellten Teil (12, 22) versehen sind, welches beweglich ist, um das Volumen der durch die Pumpe (1) bzw. den Motor (2) verdrängten Flüssigkeit zu verändern, wobei die Pumpe (1) mit einer Eingangsdrehzahl beaufschlagt wird, die innerhalb der Übertragung umgewandelt wird, so daß der Motor (2) eine variable Ausgangsdrehzahl liefert mit einem ersten Mittel (8), welches das bewegliche Teil (12) der Pumpe (1) elastisch in eine Anlageposition bringt und einem zweiten Mittel (9), welches das bewegliche Teil (22) des Motors (2) elastisch in eine Anlageposition bringt, dadurch gekennzeichnet, daß ein einziger gemeinsamer Betätigungsmechanismus (3, 4; 35, 36, 37) vorgesehen ist, der mit beiden beweglichen Teilen (12, 22) der Pumpe (1) und des Motors (2) verbunden ist, so daß jedes bewegliche Teil nur dann bewegt werden kann, wenn sich das jeweils andere bewegliche Teil in seiner festgelegten Anlageposition befindet, daß die Pumpe (1) und der Motor (2) Seite an Seite symmetrisch zueinander angeordnet sind, wobei ihre Eingangswelle (16) bzw. Ausgangswelle (26) parallel zueinander angeordnet sind und sich in gleicher Richtung auswärts erstrecken, daß ihre entsprechenden Gehäuse (13, 23) starr miteinander verbunden sind, die beweglichen Teile (12, 22) durch federndes Beaufschlagen aufeinander zu in ihre Anlageposition gebracht sind, und daß der Betätigungsmechanismus aus einem gleitbeweglichen Stab (4) besteht, dessen Endstücke in Verbindungsteile der entsprechenden beweglichen Teile (12, 22) der Pumpe (1) und des Motors (2) eingreifen.

2. Hydraulisches Getriebe, aufgebaut aus einer Pumpe (1) und einem Hydraulikmotor (2), die über einen Fluidkanal miteinander in Verbindung stehen und jeweils mit einem exzentrischen oder schräg gestellten Teil (12, 22) versehen sind, welches beweglich ist, um das Volumen der durch die Pumpe (1) bzw. den Motor (2) verdrängten Flüssigkeit zu verändern, wobei die Pumpe (1) mit einer Eingangsdrehzahl beaufschlagt wird, die innerhalb der Übertragung umgewandelt wird, so daß der Motor (2) eine variable Ausgangsdrehzahl liefert mit einem ersten Mittel (8), welches das bewegliche Teil (12) der Pumpe (1) elastisch in eine Anlageposition bringt und einem zweiten Mittel (9), welches das bewegliche Teil (22) des Motors (2) elastisch in eine Anlageposition bringt, dadurch gekennzeichnet, daß ein einziger gemeinsamer Betätigungsmechanismus (3, 4; 35, 36, 37) vorgesehen ist, der mit beiden beweglichen Teilen (12, 22) der Pumpe (1) und des Motors (2) verbunden ist, so daß die beweglichen Teile miteinander verbunden und dadurch simultan mittels des Betätigungsmechanismusses bewegbar sind, daß die Pumpe (1) und der Motor (2) Seite an Seite symmetrisch zueinander angeordnet sind, wobei ihre Eingangswelle (16) bzw. Ausgangswelle (26) parallel zueinander angeordnet sind und sich in gleicher Richtung auswärts erstrecken, daß ihre entsprechenden Gehäuse (13, 23) starr miteinander verbunden sind, die beweglichen Teile (12, 22) durch federndes Beaufschlagen aufeinander zu in ihre Anlageposition gebracht sind, daß der Betätigungsmechanismus aus einem gleitbeweglichen Stab (4) besteht, dessen Endstücke in Verbindungsteile der entsprechenden beweglichen Teile (12, 22) der Pumpe (1) und des Motors (2) eingreifen, und daß dieses Verbindungsteil der beweglichen Teile (12, 22) der Pumpe (1) und des Motors (2) eine Sackbohrung oder ähnliches aufweist, wobei diese Bohrung bezüglich der Länge des Stabes (4) so gestaltet ist, daß nicht beide beweglichen Teile (12, 22) gleichzeitig ihre Anlageposition einnehmen können.

3. Hydraulisches Getriebe, aufgebaut aus einer Pumpe (1) und einem Hydraulikmotor (2), die über einen Fluidkanal miteinander in Verbindung stehen und jeweils mit einem exzentrischen oder schräg gestellten Teil (12, 22) versehen sind, welches beweglich ist, um das Volumen der durch die Pumpe (1) bzw. den Motor (2) verdrängten Flüssigkeit zu verändern, wobei die Pumpe (1) mit einer Eingangsdrehzahl beaufschlagt wird, die innerhalb der Übertragung umgewandelt wird, so daß der Motor (2) eine variable Ausgangsdrehzahl liefert mit einem ersten Mittel (8), welches das bewegliche Teil (12) der Pumpe (1) elastisch in eine Anlageposition bringt und einem zweiten Mittel (9), welches das bewegliche Teil (22) des Motors (2) elastisch in eine Anlageposition bringt, dadurch gekennzeichnet, daß ein einziger gemeinsamer Betätigungsmechanismus (3, 4; 35, 36, 37) vorgesehen ist, der mit beiden beweglichen Teilen (12, 22) der Pumpe (1) und des Motors (2) verbunden ist, so daß zumindest ein bewegliches Teil sofort bewegt werden kann, daß die Pumpe (1) und der Motor (2) in einem gemeinsamen Gehäuse (10) eingebaut sind, und daß Stifte (35, 36) aus dem jeweiligen beweglichen Teil (12, 22) herausragen, wobei diese Stifte (35, 36) mit einem gemeinsamen drehbaren Hebelarm (37) zusammenwirken, der die Stifte so beaufschlagt, daß die Bewegung beider beweglichen Teile (12, 22) kontrolliert wird.

4. Hydraulisches Getriebe nach Anspruch 1 oder 2, dadurch gekennzeichnet, daß der Betätigungsmechanismus (3, 4; 35, 36, 37) die beweglichen Teile über einen einem Eingangskontrollsignal proportionalen Weg bewegt.

5. Hydraulisches Getriebe nach Anspruch 1, dadurch gekennzeichnet, daß das Verbindungsteil der beweglichen Teile (12, 22) der Pumpe (1) und des Motors (2) über eine Sackbohrung oder ähnliches verfügt, wobei die Bohrung bezüglich der Länge des Stabes (4) so gestaltet ist, daß sich beide beweglichen Teile (12, 22) gleichzeitig in ihrer Anlageposition befinden können.

6. Hydraulisches Getriebe nach Anspruch 2, dadurch gekennzeichnet, daß der Stab (4) sowohl mit der Pumpe (1) als auch mit dem Motor (2) starr verbunden ist.

## fig.1

pump **1**

spring

motor 38

pintle

39
control means

motor **2**

pintle spring

actuating rod 4

rotating shaft

## fig.6

**40**
screw bar

nut **42**

**39** control means

**38** motor

bearing
**41**

lever
**3**

**43** guide

fig.2

fig.3

fig.4

# fig.5